# EUROPEAN PATENT SPECIFICATION

(11) **EP 1 456 062 B1**
(45) Date of publication and mention of the grant of the patent: **08.08.2007**
(21) Application number: 02789081.3
(22) Date of filing: 22.11.2002
(51) Int. Cl.: B60R 21/16

(54) **AN AIR-BAG**
AIRBAG
AIRBAG

(30) Priority: 18.12.2001 GB 0130225
(43) Date of publication of application: 15.09.2004
(73) Proprietor: AUTOLIV DEVELOPMENT AKTIEBOLAG, 447 00 Vargarda (SE)
(72) Inventor: YAMANAKA, Kimihito, Tsukuba-shi, Ibaraki (JP)
(74) Representative: Parry, Simon James
(86) International application number: PCT/SE2002/002129
(87) International publication number: WO 2003/051680

(56) References cited:
- DE-A1- 19 939 618
- US-A- 6 073 961
- US-B1- 6 382 662

## Description

**THE PRESENT INVENTION** relates to an air-bag, and more particularly relates to an air-bag of the type in which an inner gas supply tube is provided within the air-bag, the gas supply tube being adapted to be connected to a gas generator, the gas supply tube having apertures formed in the wall thereof to direct gas into discrete inflatable regions or chambers formed within the air-bag.

It has been proposed to provide an air-bag which has a plurality of inflatable regions or chambers which are to be supplied with gas from a gas generator. On example of such an air-bag is so-called "inflatable curtain" which is adapted to be mounted in the roof of the vehicle above the door openings of the vehicle, and is also adapted, when an accident occurs, to be deployed to lie adjacent the window openings formed in the door, thus forming a protective curtain located between the occupant of the vehicle and the side of the vehicle. Such inflatable curtains provide protection to the occupant of the vehicle in the event of a side impact or roll-over situation.

DE-A-19939618, on which the preamble at claim 1 is based, discloses a safety device of this type in which the inflatable curtain is formed of an inflatable element which is divided into a plurality of regions or chambers which are to be inflated. An internal fabric gas supply duct is provided. That gas supply duct is provided, along its length, with circular apertures formed in the wall of the duct through which gas can flow from the duct into those regions or chambers of the inflatable element which are to be inflated. It has been found that there is frequently substantial damage to the gas supply duct in the region of the circular apertures, especially damage in the form of fraying of the fabric, when the inflatable element has been inflated. This is undesirable since it can lead to an unpredictable inflation characteristic.

The present invention seeks to provide an improved air-bag.

According to this invention there is provided an air-bag containing a woven gas supply duct, the gas supply duct being adapted to be connected to a gas generator, and having apertures formed therein, the apertures being positioned to direct a flow of gas in the gas supply duct to areas or regions of the air-bag which are to be inflated, wherein the apertures are rectangular apertures, the edges of the apertures being co-aligned with warp and weft yarns forming the gas supply duct.

Preferably the warp and weft yarns are aligned with the axis and extend transverse to the axis of the gas supply duct, the sides of the aperture lying parallel to and transverse to the axis of the duct.

Alternatively the warp and weft yarns extend 45⁰ to the axis of the gas supply duct, the sides of the aperture also lying at 45⁰ to the axis of the supply duct.

Advantageously the air-bag has a plurality of separate regions which are to be inflated and has, at one edge, fixing means to fix the air-bag to part of the roof of a motor vehicle, the air-bag being in the form of an inflatable curtain.

The invention also relates to a method of making an air-bag as described above, the method comprising the step of forming said apertures using a laser-cutting technique.

In order that the invention may be more readily understood, and so that further feature thereof may be appreciated, the invention will now be described, by way of example, with reference to the accompanying drawings in which:
FIGURE 1 is a diagrammatic side view of an air-bag in accordance with the invention,
FIGURE 2 is an enlarged view of part of Figure 1,
FIGURE 3 is an enlarged view of part of Figure 2, and
FIGURE 4 is a view corresponding to Figure 3 illustrating a modified embodiment of the invention.

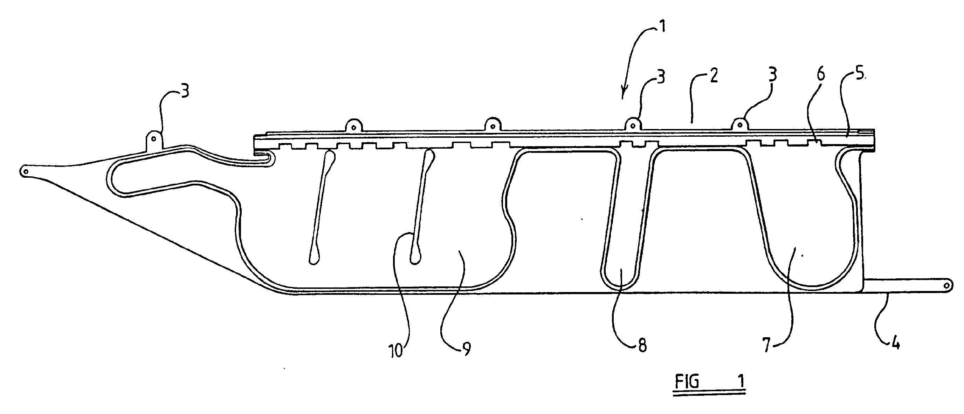

Referring initially to Figure 1 of the accompanying drawings, an air-bag 1 is illustrated which is intended to form a so-called inflatable curtain. The air-bag 1 has an upper edge 2 provided with a plurality of mounting lugs 3 which are adapted to be connected to a plurality of mounting points provided in the roof-line of the motor vehicle. The mounting points will not be in linear alignment, but will, typically, follow the roof-line of the vehicle and will include mounting points provided on either the "A"-Post or the "C"-Post.

The air-bag is provided with a protruding strap 4 adapted to be connected to a further mounting point.

The air-bag is provided, within its interior, with a gas supply duct 5, adapted to be connected, at one end, to a gas generator. The gas supply duct 5 is provided, at selected points spaced along its length, with gas outlet apertures 6. The gas outlet apertures 6 communicate with a plurality of separate inflatable regions 7, 8, 9 of the air-bag. The inflatable region 9 is provided with seams 10 which across it dividing the region 9 into a plurality of substantially parallel chambers. Air-bags of this general design are well known.

Referring now to Figure 2 of the accompanying drawings, which shows part of the air-bag 1 of Figure 1 to an enlarged scale, it can be seen that the fabric gas supply duct 5 is provided with a plurality of apertures 6 which are not of circular form, but which are of rectangular form. Here it is to be understood that in this Specification the term "rectangle" is intended to mean a four-sided plane rectilinear figure with four right angles, and includes, within the definition, a square.

As can be seen more clearly from Figure 3, the aperture 6 that is formed in the gas duct 5 is so orientated that the sides 11 and 12 of the rectangular aperture 6 are co-aligned with the warp and weft fibres 13, 14 of the gas duct 5. The aperture 6 may be cut using a laser cutting technique. It is believed that a rectangular aperture of this type, having the sides of the aperture in alignment with the warp and weft fibres, will lead to a minimum amount of fraying during deployment of the air-bag. The use of a laser-cutting technique will help to "heat-seal" the fibres.

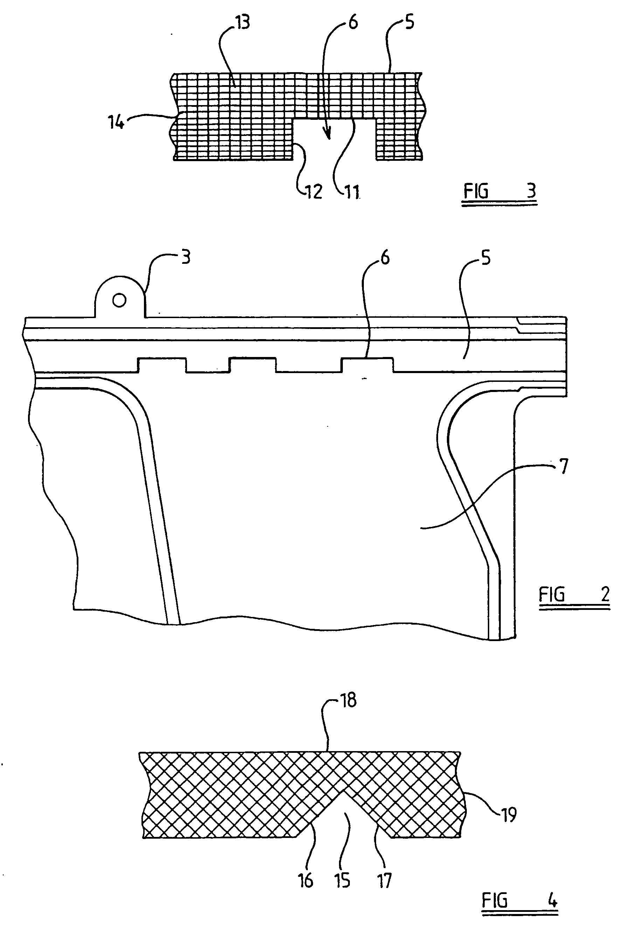

It is to be appreciated that in Figure 3, the warp and weft fibres of the fabric run in alignment with and transverse to the axis of the gas duct 5. The gas duct 5 may, alternatively, be woven in such a way that the warp and weft fibres extend at 45° to the axis of the gas duct, with the gas duct thus effectively being a "braided" tube. In such a situation, an aperture 15 may be provided within the gas duct, as shown in Figure 4, that aperture 15 again being rectangular, and having the sides 16, 17 thereof aligned with the warp and weft fibres 18, 19. The aperture may, therefore, be considered to present a "diamond" shape, but the aperture will still be rectangular.

In the present Specification "comprise" means "includes or consists of" and "comprising" means "including or consisting of".

## Claims

1. An air-bag (1) containing a woven gas supply duct (5), the gas supply duct (5) being adapted to be connected to a gas generator, and having apertures (6, 15) formed therein, the apertures (6, 15) being positioned to direct a flow of gas in the gas supply duct to areas or regions (7, 8, 9) of the air-bag (1) which are to be inflated, **characterised in that** the apertures (6, 15) are rectangular apertures, the edges of the apertures being co-aligned with warp and weft yarns (13, 14; 18, 19) forming the gas supply duct.

2. An air-bag according to Claim 1 wherein the warp and weft yarns (13, 14) are aligned with the axis and extend transverse to the axis of the gas supply duct (5), the sides (11, 22) of the aperture (6) lying parallel 1 to and transverse to the axis of the duct (5).

3. An air-bag according to Claim 1 wherein the warp and weft yarns (18, 19) extend 45° to the axis of the gas supply duct (5), the sides (16, 17) of the aperture (15) also lying at 45° to the axis of the supply duct.

4. An air-bag according to any one of the preceding Claims wherein the air-bag has a plurality of separate regions (7, 8, 9) which are to be inflated and has, at one edge (2), fixing means to fix (3) the air-bags to part of the roof of a motor vehicle, the air-bag being in the form of an inflatable curtain.

5. An air-bag according to any one of the preceding Claims, wherein said apertures (13, 14; 16, 17) have been formed using a laser cutting technique.

## Patentansprüche

1. Airbag (1), der einen gewebten Gaszufuhrkanal (5) enthält, wobei der Gaszufuhrkanal (5) so angepasst ist, dass er mit einem Gasgenerator verbunden werden kann und darin geformte Öffnungen (6, 15) aufweist, wobei die Öffnungen (6, 15) so positioniert sind, dass sie einen Gasstrom im Gasversorgungskanal in aufzublasende Flächen oder Bereiche (7, 8, 9) des Airbags (1) führen, **dadurch gekennzeichnet dass** die Öffnungen (6, 15) rechteckige Öffnungen sind, wobei die Kanten der Öffnungen mit den Gaszufuhrkanal bildenden Kett- und Schussfäden (13, 14; 18, 19) ausgerichtet sind.

2. Airbag nach Anspruch 1, bei welchem die Kett- und Schussfäden (13, 14) mit der Achse ausgerichtet sind und sich quer zur Achse des Gaszufuhrkanals (5) erstrecken, wobei die Seiten (11, 22) der Öffnung (6) parallel und quer zur Achse des Kanals (5) liegen.

3. Airbag nach Anspruch 1, bei welchem sich die Kett- und Schussfäden (18, 19) in 45° zur Achse des Gaszufuhrkanals (5) erstrecken, wobei die Seiten (16, 17) der Öffnung (15) ebenfalls in 45° zur Achse des Zufuhrkanals (5) liegen.

4. Airbag nach einem der vorhergehenden Ansprüche, bei welchem der Airbag eine Vielzahl von einzelnen aufzublasenden Bereichen (7, 8, 9) aufweist, und an einer Kante (2) Befestigungsmittel (3) aufweist, um die Airbags an einem Teil des Fahrzeugdaches zu befestigen, wobei der Airbag die Form eines aufblasbaren Vorhangs hat.

5. Airbag nach einem der vorhergehenden Ansprüche, bei welchem die Öffnungen (13, 14; 16, 17) unter Einsatz einer Laserschnitttechnik gebildet wurden.

## Revendications

1. Coussin gonflable (1) contenant un conduit de délivrance de gaz (5) tissé, le conduit de délivrance de gaz (5) étant adapté pour être relié à un générateur de gaz, et présentant des ouvertures (6, 15) formées à l'intérieur, les ouvertures (6, 15) étant positionnées de manière à diriger une circulation du gaz dans le conduit de délivrance de gaz vers des endroits ou des zones (7, 8, 9) du coussin gonflable (1) qui doivent être gonflés, **caractérisé en ce que** les ouvertures (6, 15) sont des ouvertures rectangulaires, les bords des ouvertures étant co-alignés avec les fils de chaîne et de trame (13, 14 ; 18, 19) qui forment le conduit de délivrance de gaz.

2. Coussin gonflable selon la revendication 1, dans lequel les fils de chaîne et de trame (13, 14) sont alignés avec l'axe, et s'étendent de manière transversale à l'axe du conduit de délivrance de gaz (5), les côtés (11, 22) de l'ouverture (6) étant parallèles et transversaux à l'axe du conduit (5).

3. Coussin gonflable selon la revendication 1, dans lequel les fils de chaîne et de trame (18, 19) s'étendent sous un angle de 45° par rapport à l'axe du conduit de délivrance de gaz (5), les côtés (16, 17) de l'ouverture (15) se trouvant également sous un angle de 45° par rapport à l'axe du conduit de délivrance.

4. Coussin gonflable selon l'une quelconque des revendications précédentes, dans lequel le coussin gonflable présente une pluralité de zones séparées (7, 8, 9) qui doivent être gonflées et présente, au niveau d'un bord (2), des moyens de fixation (3) pour fixer le coussin gonflable sur une partie du toit d'un véhicule à moteur, le coussin gonflable se présentant sous la forme d'un rideau gonflable.

5. Coussin gonflable selon l'une quelconque des revendications précédentes, dans lequel lesdites ouvertures (13, 14 ; 16, 17) ont été formées en faisant appel à une technique de découpe par laser.
